# EUROPÄISCHE PATENTSCHRIFT

(11) **EP 2 681 467 B1**
(45) Veröffentlichungstag und Bekanntmachung des Hinweises auf die Patenterteilung: **25.03.2015**
(21) Anmeldenummer: 12704009.5
(22) Anmeldetag: 01.02.2012
(51) Int. Cl.: F16H 57/04, F16H 61/00

(54) **FILTERTRÄGER FÜR DEN ÖLFILTER EINES GETRIEBES**
FILTER SUPPORT FOR THE OIL FILTER OF A TRANSMISSION SYSTEM
PORTE-FILTRE POUR LE FILTRE À HUILE D'UNE TRANSMISSION

(30) Priorität: 04.03.2011 DE 202011003532 U
(43) Veröffentlichungstag der Anmeldung: 08.01.2014
(73) Patentinhaber: ZF Friedrichshafen AG, 88038 Friedrichshafen (DE)
(72) Erfinder: MAYER-JABS, Reinhold, 88250 Weingarten (DE)
(86) Internationale Anmeldenummer: PCT/EP2012/051616
(87) Internationale Veröffentlichungsnummer: WO 2012/119814

(56) Entgegenhaltungen:
- EP-A2- 2 181 919
- WO-A2-02/31365
- US-A- 3 908 693
- US-B1- 6 245 232

## Beschreibung

Die vorliegende Erfindung bezieht sich auf einen Filterträger für den Ölfilter eines Getriebes gemäß dem Oberbegriff des Patentanspruchs 1, wie aus Dokument WO 02/31365 A2 bekannt. Insbesondere bezieht sich die Erfindung auf einen Filterträger für den Ölfilter eines Schiffsgetriebes.

Aus dem Stand der Technik ist für Schiffsgetriebe bekannt, die Ölfilter mit zwei Schrauben an einem am Gehäuse des Getriebes angeschweißten Halter zu befestigen, was in nachteiliger Weise die Schwingungsanfälligkeit erhöht.

Des Weiteren werden am Ölzulauf und am Ölablauf zur Umlenkung der Ölströmung um 90° Ermeto ® - Verschraubungen oder wirkungsgleiche Bauteile verwendet, wodurch Druckverluste verursacht werden können. In der Regel kann nur eine vom Filterhersteller hergestellte Verschmutzungsanzeige verwendet werden; ferner ist ein zusätzlicher Hydraulikblock erforderlich, um die Temperaturüberwachung des Öls vor dem Kühler zu realisieren, wobei zum Anschluss einer Reservepumpe zusätzliche Bauteile benötigt werden.

Ferner werden weitere Bauteile benötigt, um eine sichere Befestigung der Ölwanne zu gewährleisten.

Der vorliegenden Erfindung liegt die Aufgabe zugrunde, einen Filterträger für den Ölfilter eines Getriebes, insbesondere eines Schiffsgetriebes, anzugeben, durch den eine sichere Befestigung des Filters und der Ölwanne gewährleistet wird und die Anzahl der benötigten Bauteile im Vergleich zum Stand der Technik gering gehalten wird.

Diese Aufgabe wird durch die Merkmale des Schutzanspruchs 1 gelöst. Weitere erfindungsgemäße Ausgestaltungen und Vorteile gehen aus den Unteransprüchen hervor.

Demnach wird ein Filterträger für den Ölfilter eines Getriebes, insbesondere eines Schiffsgetriebes, vorgeschlagen, welcher mittels mehrerer Befestigungsmittel, vorzugsweise mittels vier Schrauben derart am Getriebegehäuse befestigt ist, dass die Schwingungsanfälligkeit signifikant reduziert ist.

Des Weiteren umfasst der erfindungsgemäße Filterträger eine Befestigungsvorrichtung für den Ölfilter, wobei der Ölfilter vorzugsweise mittels acht Schrauben befestigt wird. Ferner umfasst der Filterträger einen ersten Anschluss für den Ölzulauf, der beispielsweise mit der Pumpe oder dem Kühler fluidtechnisch verbunden sein kann, wobei optional ein zweiter Anschluss für den Ölzulauf vorgesehen sein kann, der beispielsweise mit einer Reservepumpe fluidtechnisch verbunden sein kann.

Ferner umfasst der erfindungsgemäß ausgestaltete Filterträger einen ersten Anschluss für den Ölablauf, der beispielsweise mit dem Kühler oder mit der hydraulischen Steuerung fluidtechnisch verbunden sein kann, wobei optional ein zweiter Anschluss für den Ölablauf vorgesehen sein kann.

Gemäß der Erfindung sind die Anschlüsse für den Ölzulauf und den Ölablauf derart ausgestaltet und angeordnet, dass eine strömungsgünstige 90° Umlenkung zwischen den Anschlüssen und dem Filter ohne zusätzliche Bauteile erzielt wird, wodurch Druckverluste vermieden werden.

Gemäß der Erfindung ist zudem vorgesehen, dass der Filterträger einen Anschluss für eine Verschmutzungsanzeige des Filters umfasst; ferner kann der Filterträger einen Anschluss für eine Temperaturanzeige des Öls vor dem Kühler aufweisen.

Der gemäß der Erfindung ausgestaltete Filterträger weist zudem mindestens ein Innengewinde für Schrauben zur Befestigung der Ölwanne auf.

Durch die erfindungsgemäße Konzeption wird ein Filterträger zur Verfügung gestellt, welcher bei vielen Getriebefamilien eingesetzt werden kann. Durch die integrierten Anschlüsse für den Ölablauf, den Ölzulauf, die Verschmutzungs- und die Temperaturanzeige werden bei einer sehr kompakten Bauweise im Vergleich zum Stand der Technik weniger Bauteile benötigt.

Die Erfindung wird im Folgenden anhand der beigefügten Figuren beispielhaft näher erläutert. Es zeigen:
- Figur 1:: Eine schematische perspektivische Ansicht einer Ausführungsform eines erfindungsgemäßen Filterträgers;
- Figur 2:: eine weitere perspektivische Ansicht des in Figur 1 dargestellten Filterträgers zur Veranschaulichung der Befestigung der Ölwanne; und
- Figur 3:: eine schematische Schnittansicht des in Figur 1 dargestellten Filterträgers.

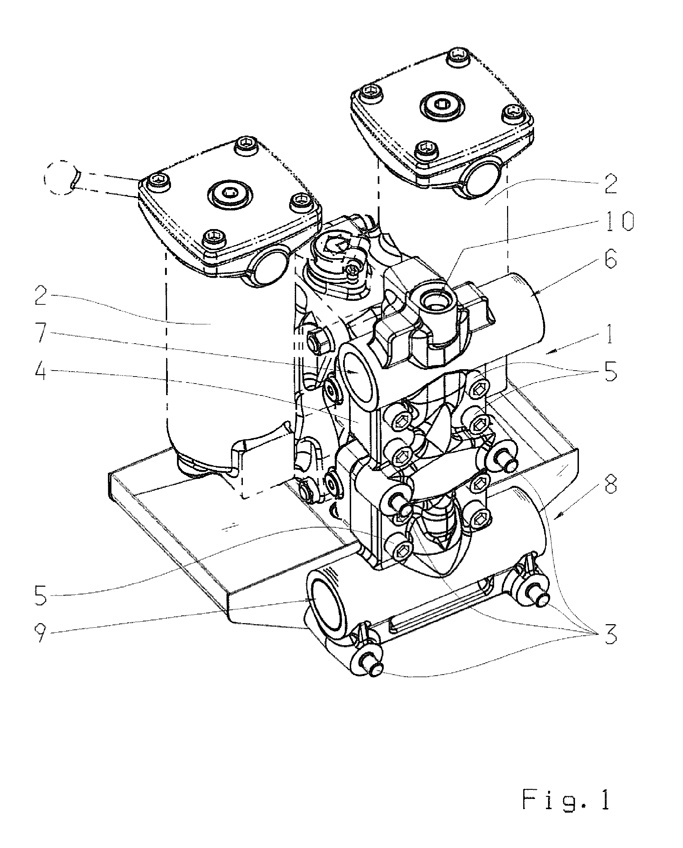

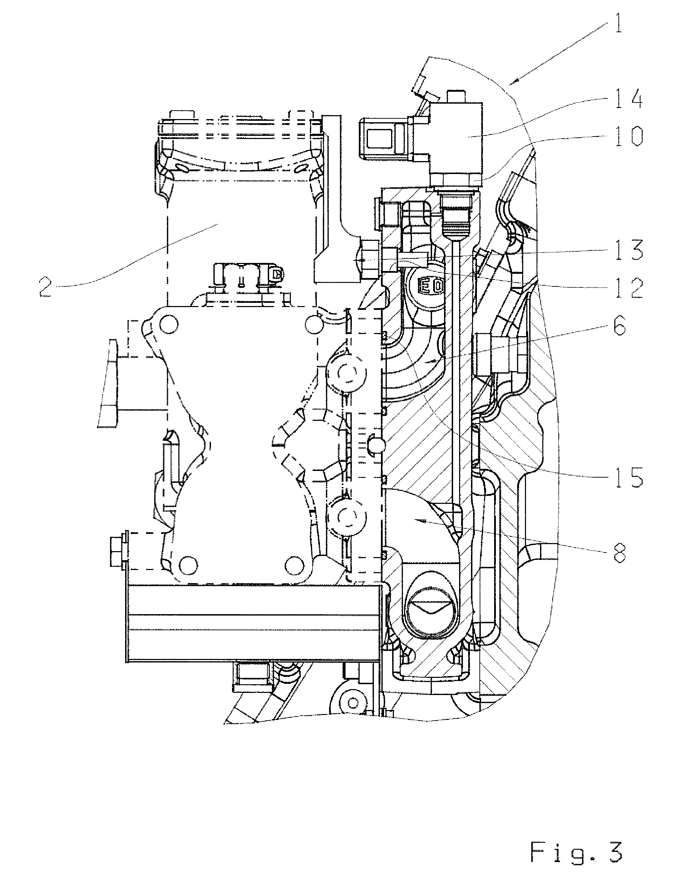

In Figuren 1, 2 und 3 ist ein gemäß der Erfindung ausgestalteter Filterträger 1 dargestellt, wobei der Ölfilter mit dem Bezugszeichen 2 versehen ist. Der Filterträger 1 ist bei dem gezeigten Beispiel mittels vier Schrauben 3 derart am Getriebegehäuse befestigt, dass die Schwingungsanfälligkeit signifikant reduziert ist. Wie aus Figuren 1 und 3 ersichtlich umfasst der Filterträger 1 eine Befestigungsvorrichtung 4 für den Ölfilter 2, wobei der Ölfilter 2 bei dem gezeigten Beispiel mittels acht Schrauben 5 am Filterträger 1 befestigt wird.

Der gezeigte Filterträger 1 umfasst einen ersten Anschluss 6 für den Ölzulauf, der mit der Pumpe oder dem Kühler fluidtechnisch verbunden ist und einen zweiten Anschluss 7 für den Ölzulauf, durch den eine fluidtechnische Verbindung mit einer Reservepumpe ermöglicht wird.

Bei dem gezeigten Beispiel sind ein erster Anschluss 8 für den Ölablauf, der mit dem Kühler oder mit der hydraulischen Steuerung fluidtechnisch verbunden ist und ein zweiter Anschluss 9 für den Ölablauf vorgesehen; ein erfindungsgemäß vorgesehener Anschluss für eine in Figur 3 dargestellte Verschmutzungsanzeige 14 des Ölfilters 1 ist mit dem Bezugszeichen 10 versehen. Durch die Anschlüsse 6, 7, 8 und 9 für den Ölzulauf und den Ölablauf wird eine strömungsgünstige 90° Umlenkung zwischen den Anschlüssen und dem Ölfilter 2 ohne die Notwendigkeit zusätzlicher Bauteile erzielt.

Bezugnehmend auf Figur 3 weist der Filterträger 1 einen Anschluss 12 für eine Temperaturanzeige 13 des Öls vor dem Kühler auf; mit 15 ist eine Abdichtung des Filterträgers 1 zum Ölfilter 2 bezeichnet. Durch den integrierten Anschluss 12 für die Temperaturanzeige 13 des Öls vor dem Kühler entfällt in vorteilhafter Weise die Notwendigkeit eines zusätzlichen Hydraulikblocks zur Realisierung der Temperaturüberwachung.

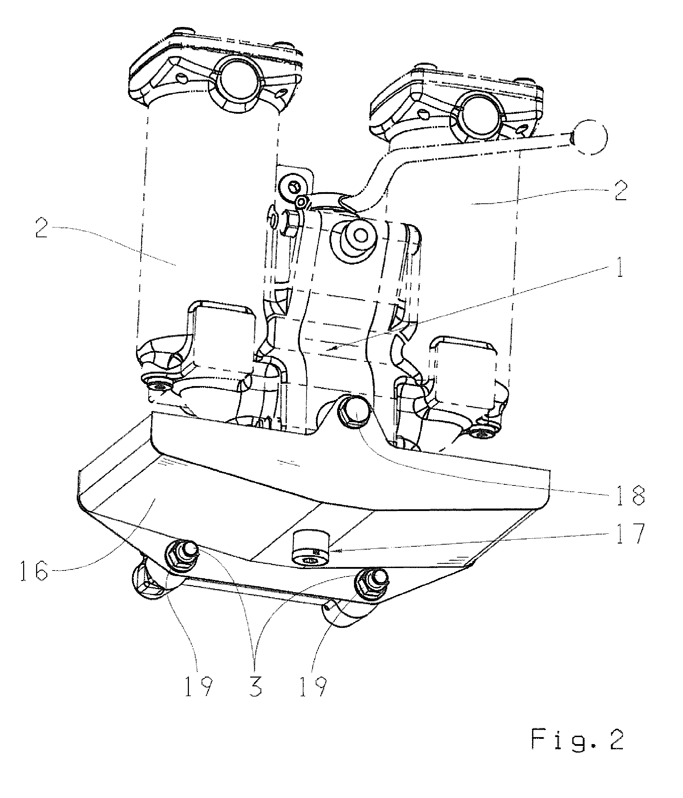

Der erfindungsgemäße Filterträger 1 weist zudem mindestens ein Innengewinde für Schrauben 18 zur Befestigung der Ölwanne 16 auf, wie anhand Figur 2 veranschaulicht; in Figur 2 ist mit dem Bezugszeichen 17 der Ablauf der Ölwanne 16 bezeichnet. Darüber hinaus sind an dem Filterträger Löcher oder Bohrungen ausgebildet, durch welche Stiftschrauben 3, welche an mindestens einem Ende ein Gewinde aufweisen und mit dem anderen Ende im Getriebegehäuse befestigt ist, durchgesteckt werden können, so dass der Filterträger mittels einer Mutter 19 an der Stiftschraube 3, und damit dem Getriebegehäuse, befestigt werden kann.

### Bezugszeichen

- 1: Filterträger
- 2: Ölfilter
- 3: Schraube
- 4: Befestigungsvorrichtung
- 5: Schraube
- 6: erster Anschluss für den Ölzulauf
- 7: zweiter Anschluss für den Ölzulauf
- 8: erster Anschluss für den Ölablauf
- 9: zweiter Anschluss für den Ölablauf
- 10: Anschluss für eine Verschmutzungsanzeige 14
- 12: Anschluss für eine Temperaturanzeige 13
- 13: Temperaturanzeige
- 14: Verschmutzungsanzeige
- 15: Abdichtung des Filterträgers 1 zum Ölfilter 2
- 16: Ölwanne
- 17: Ablauf der Ölwanne 16
- 18: Schraube
- 19: Mutter

## Patentansprüche

1. Filterträger (1) für einen Ölfilter (2) eines Getriebes, insbesondere eines Schiffsgetriebes, wobei der Filterträger (1) mittels mehrerer Befestigungsmittel (3) derart an einem Getriebegehäuse befestigbar ist, dass eine Schwingungsanfälligkeit signifikant reduziert ist, wobei der Filterträger (1) einen ersten Anschluss (6) für einen Ölzulauf, der mit einer Pumpe oder einem Kühler fluidtechnisch verbindbar ist und einen ersten Anschluss (8) für einen Ölablauf, der mit dem Kühler oder mit einer hydraulischen Steuerung fluidtechnisch verbindbar ist, aufweist, wobei der erste Anschluss (6) für den Ölzulauf und der erste Anschluss (8) für den Ölablauf derart ausgestaltet und angeordnet sind, dass eine strömungsgünstige 90° Umlenkung zwischen den Anschlüssen und dem Ölfilter (2) ohne zusätzliche Bauteile erzielt wird, und wobei der Filterträger einen Anschluss für eine Verschmutzungsanzeige (14) des Ölfilters umfasst, **dadurch gekennzeichnet, dass** der Filterträger mindestens ein Innengewinde für Schrauben (18) zur Befestigung einer Ölwanne (16) aufweist.

2. Filterträger (1) für den Ölfilter (2) eines Getriebes, insbesondere eines Schiffsgetriebes, nach Anspruch 1, **dadurch gekennzeichnet, dass** er einen Anschluss (12) für eine Temperaturanzeige (13) des Öls vor dem Kühler umfasst.

3. Filterträger (1) für den Ölfilter (2) eines Getriebes, insbesondere eines Schiffsgetriebes, nach Anspruch 1 oder 2, **dadurch gekennzeichnet, dass** er einen zweiten Anschluss (7) für den Ölzulauf aufweist, der mit einer Reservepumpe fluidtechnisch verbunden ist, welcher derart ausgestaltet und angeordnet ist, dass eine strömungsgünstige 90° Umlenkung zwischen dem Anschluss (7) und dem Ölfilter (2) ohne zusätzliche Bauteile erzielt wird.

4. Filterträger (1) für den Ölfilter (2) eines Getriebes, insbesondere eines Schiffsgetriebes, nach Anspruch 1, 2 oder 3, **dadurch gekennzeichnet, dass** er einen zweiten Anschluss (9) für den Ölablauf aufweist, der derart ausgestaltet und angeordnet ist, dass eine strömungsgünstige 90° Umlenkung zwischen dem Anschluss (9) und dem Ölfilter (2) ohne zusätzliche Bauteile erzielt wird.

## Claims

1. Filter support (1) for an oil filter (2) of a transmission, in particular of a ship's transmission, the filter support (1) being fastenable to a transmission housing by a plurality of fastening means (3) in such a way that a susceptibility to vibration is significantly reduced, the filter support (1) having a first connection (6) for an oil inflow, which is connectable fluidically to a pump or a cooler, and a first connection (8) for an oil outflow, which is connectable fluidically to the cooler or to a hydraulic control, the first connection (6) for the oil inflow and the first connection (8) for the oil outflow being configured and arranged in such a way that a flow-benefitting 90° deflection is achieved between the connections and the oil filter (2) without additional components, and
the filter support comprising a connection for a contamination indicator (14) of the oil filter, **characterized in that**
the filter support has at least one internal thread for screws (18) for fastening an oil pan (16).

2. Filter support (1) for the oil filter (2) of a transmission, in particular of a ship's transmission, according to Claim 1, **characterized in that** it comprises a connection (12) for a temperature indicator (13) of the oil upstream of the cooler.

3. Filter support (1) for the oil filter (2) of a transmission, in particular of a ship's transmission, according to Claim 1 or 2, **characterized in that** it has a second connection (7) for the oil inflow, which is connected fluidically to a reserve pump and which is configured and arranged in such a way that a flow-benefitting 90° deflection is achieved between the connection (7) and the oil filter (2) without additional components.

4. Filter support (1) for the oil filter (2) of a transmission, in particular of a ship's transmission, according to Claim 1, 2 or 3, **characterized in that** it has a second connection (9) for the oil outflow, which is configured and arranged in such a way that a flow-benefitting 90° deflection is achieved between the connection (9) and the oil filter (2) without additional components.

## Revendications

1. Support de filtre (1) pour un filtre à huile (2) d'une transmission, en particulier d'une transmission de bateau, le support de filtre (1) pouvant être fixé à un boîtier de transmission au moyen de plusieurs moyens de fixation (3) de telle sorte que le risque d'oscillation soit considérablement réduit, le support de filtre (1) présentant un premier raccord (6) pour une alimentation en huile qui peut être connecté à une pompe ou à un radiateur par une technique fluidique et un premier raccord (8) pour une sortie d'huile qui peut être connecté au radiateur ou à une commande hydraulique par une technique fluidique, le premier raccord (6) pour l'alimentation en huile et le premier raccord (8) pour la sortie d'huile étant configurés et disposés de telle sorte qu'une déviation favorable à l'écoulement de 90° entre les raccords et le filtre à huile (2) soit obtenue sans composants supplémentaires, et le support de filtre comprenant un raccord pour un indicateur d'encrassement (14) du filtre à huile, **caractérisé en ce que** le support de filtre présente au moins un filetage interne pour des vis (18) pour la fixation d'un carter d'huile (16).

2. Support de filtre (1) pour le filtre à huile (2) d'une transmission, en particulier d'une transmission de bateau, selon la revendication 1, **caractérisé en ce qu'**il comprend un raccord (12) pour un indicateur de température (13) de l'huile avant le radiateur.

3. Support de filtre (1) pour le filtre à huile (2) d'une transmission, en particulier d'une transmission de bateau, selon la revendication 1 ou 2, **caractérisé en ce qu'**il présente un deuxième raccord (7) pour l'alimentation en huile, lequel est connecté à une pompe de réserve par une technique fluidique, et est configuré et disposé de telle sorte qu'une déviation favorable à l'écoulement de 90° entre le raccord (7) et le filtre à huile (2) soit obtenue sans composants supplémentaires.

4. Support de filtre (1) pour le filtre à huile (2) d'une transmission, en particulier d'une transmission de bateau, selon la revendication 1, 2 ou 3, **caractérisé en ce qu'**il présente un deuxième raccord (9) pour la sortie d'huile, lequel est configuré et disposé de telle sorte qu'une déviation favorable à l'écoulement de 90° entre le raccord (9) et le filtre à huile (2) soit obtenue sans composants supplémentaires.
